# FASCICULE DE BREVET EUROPEEN

(11) **EP 2 530 366 B1**
(45) Date de publication et mention de la délivrance du brevet: **30.04.2014**
(21) Numéro de dépôt: 12170018.1
(22) Date de dépôt: 30.05.2012
(51) Int. Cl.: F16L 59/02, F16L 59/12, B64G 1/58

(54) **Matelas isolant thermiquement et procédé de fixation d'un tel matelas isolant à un support**
Thermisch isolierende Matte und Befestigungsvorgang für eine solche Matte
Thermally insulating mattress and fixing process for such a blanket to a support

(30) Priorité: 01.06.2011 FR 1101691
(43) Date de publication de la demande: 05.12.2012
(73) Titulaire: ASTRIUM SAS, 92150 Suresnes (FR)
(72) Inventeur: Charvet, Didier, 31650 LAUZERVILLE (FR)
(74) Mandataire: Cabinet Plasseraud

(56) Documents cités:
- US-A- 4 399 642
- US-A- 5 093 957
- US-B1- 6 279 857
- US-B1- 7 584 582

## Description

La présente invention concerne un matelas isolant pour engin spatial thermiquement et un procédé de fixation d'un tel matelas isolant à un support. En particulier, l'invention concerne un matelas généralement appelé matelas super isolant ou MLI de l'anglais « Multi-Layer Insulation ».

Le document US 7,584,582 divulgue un matelas isolant connu.

Un tel matelas est utilisé pour isoler un engin spatial, par exemple un satellite ou une sonde spatiale, contre les effets d'un chauffage localisé provenant du soleil et contre la perte de chaleur par rayonnement du côté à l'ombre de l'engin spatial. Un tel matelas est composé de plusieurs couches isolantes superposées les unes aux autres. Il comprend des couches internes composées de Mylar (marque déposée) aluminisé, ou de Kapton (marque déposée) aluminisé séparées par des couches de Dacron (marque déposée). Ces couches internes sont recouvertes de chaque côté d'une couche externe en matériau d'isolation thermique tel que, par exemple, des matériaux plastiques diélectriques de type Kapton, Teflon (marque déposée) ou d'autres matériaux..

Lorsque ce matelas est fixé à un engin spatial, il peut-être fixé mécaniquement sur des supports en forme est d'axes surmontés de clips. Il est alors emboutis à l'aide d'un emporte-pièce puis, il fixé à une paroi de l'engin spatial à l'aide de ces éléments de fixation.

Il a été constaté qu'un tel matelas génère de la contamination particulaire. Notamment, un composant, le Dacron, situé à l'intérieur de ce matelas tend à générer des fibres de quelques microns de diamètre qui, sous l'effet de la manipulation et des vibrations, sortent du matelas entre autres par les orifices pratiqués pour assurer sa fixation à l'engin spatial. Cette contamination particulaire peut générer un dysfonctionnement des instruments optiques ou plus généralement de la charge utile embarqués dans l'engin spatial. Un tel dysfonctionnement est non admissible compte tenu de l'impossibilité de nettoyer les éléments contaminés une fois l'engin spatial envoyé dans l'espace.

L'invention a notamment pour but d'éviter la contamination particulaire de la charge utile par l'un des composants internes des matelas isolants, par exemple par le Dacron.

A cet effet, l'invention a pour objet un matelas isolant thermiquement conforme à la revendication 1.

L'invention a notamment pour objet un procédé de fixation conforme à la revendication 14

L'invention sera mieux comprise à la lecture de la description qui va suivre, donnée uniquement à titre d'exemple et faîte en se référant aux dessins, sur lesquels :
- la figure 1 est une vue schématique en coupe transversale d'un matelas isolant selon un premier mode de réalisation de l'invention et sans élément de fixation ;
- la figure 2 est une vue schématique en coupe transversale du matelas illustré sur la figure 1 avec un exemple d'élément de fixation ;
- la figure 3 est une vue schématique en coupe transversale d'un matelas selon un second mode de réalisation de l'invention sans élément de fixation ;
- la figure 4 est une vue en coupe transversale du matelas illustré sur la figure 3 avec un exemple d'élément de fixation ; et
- la figure 5 est un diagramme illustrant les étapes du procédé de fixation selon l'invention.

Sur les différentes figures, les mêmes références désignent des éléments identiques ou similaires.

Dans la description qui va suivre, les termes « supérieur » et « inférieur » sont utilisés en référence au matelas illustré sur les figures jointes et ne sont nullement limitatifs.

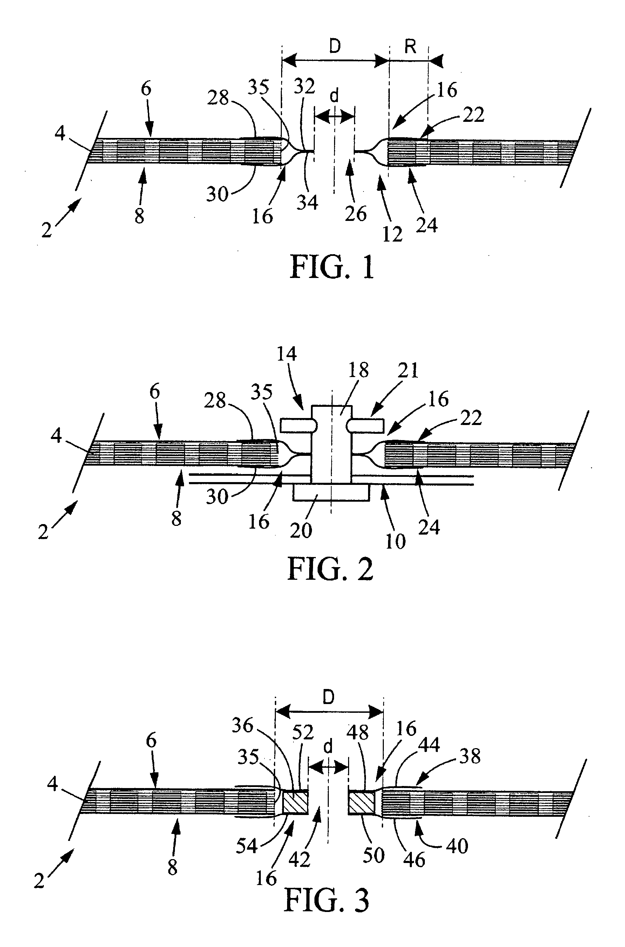

En référence aux figures 1 et 2, un matelas isolant thermiquement 2 selon un premier mode de réalisation de l'invention comprend un ensemble de couches isolantes 4, 6, 8 empilées les unes sur les autres. En particulier, le matelas isolant 2 comprend une couche isolante externe supérieure 6, des couches isolantes internes 4 et une couche isolante externe inférieure 8.

Les couches isolantes internes 4 sont réalisées dans un maillage en matière plastique et, de préférence, en Dacron (marque déposée). La couche isolante externe supérieure 6 et la couche isolante externe inférieure 8 sont réalisées dans un matériau diélectrique et isolant thermiquement tel que, par exemple, du plastique et plus particulièrement du Kapton (marque déposée) ou du Teflon (marque déposée).

Le matelas isolant 2 est destiné à être fixé à un support 10, par exemple à une paroi d'un engin spatial, à l'aide d'un élément de fixation 14. Les couches isolantes 4, 6 et 8 comportent, en des endroits choisis pour la fixation, des trous traversant 12 et une entretoise 16 propre à enceindre la tranche 35 des couches isolantes 4, 6 et 8 bordant le trou traversant 12.

L'élément de fixation 14 comprend généralement une tige 18 propre à être agencée dans le trou traversant 12, une tête 20 agencée contre la face inférieure du support 10, et un élément de retenu 21 apte à retenir le matelas isolant 2 contre le support 10. Par exemple, selon le mode de réalisation illustré, la tige 18 comprend une rainure axiale et l'élément de retenu 21 est constitué par un clip en forme de barre, propre à s'emmancher dans ladite rainure. En variante, la tige 18 est munie d'une extrémité filetée et l'élément de retenu 21 est constitué par un écrou.

Le trou traversant 12 présente un diamètre D supérieur au diamètre de la tige 18 de l'élément de fixation. En particulier, le trou traversant 12 présente un diamètre D sensiblement compris entre 6 et 12 mm et de préférence, compris entre 8 et 10 mm.

L'entretoise 16 est propre à enceindre de façon étanche la tranche 35 des couches isolantes 4, 6, 8 pour retenir à l'intérieur du matelas isolant 2, les fibres en matière plastique, et en particulier de Dacron, propres à se détacher et à sortir du matelas.

A cet effet, l'entretoise 16 est intercalée entre la tranche 35 des couches isolantes 4, 6, 8 bordant le trou traversant 12 et une partie de l'élément de fixation 14. Selon les modes de réalisation illustrés, cette partie de l'élément de fixation est une partie de la tige 18. En variante, l'élément de fixation présente une forme différente et cette partie est constituée par une autre partie.

L'entretoise 16 comprend une première feuille 22 et une deuxième feuille 24, par exemple, en forme de disque ou de quadrilatère, aussi appelées pastilles.

La première feuille 22 et la deuxième feuille 24 sont pourvues d'un orifice traversant 26 de diamètre d sensiblement supérieur au diamètre de la tige 18 et inférieur au diamètre D du trou traversant 12.

L'orifice traversant 26 présente un diamètre d sensiblement compris entre 2 et 8 mm et de préférence, compris entre 3 et 6 mm.

En particulier, la différence entre le diamètre D du trou traversant 12 et le diamètre d de l'orifice traversant 26 est supérieure à 3 mm.

Le bord périphérique extérieur 28 de la première feuille 22 est fixé de façon étanche par collage ou thermo soudure à la couche isolante externe supérieure 6, et en particulier à un bord de celle-ci bordant le trou traversant 12. Le bord périphérique extérieur 30 de la deuxième feuille 24 est fixé de façon étanche par collage ou thermo soudure à la couche isolante externe inférieure 8, et en particulier à un bord de celle-ci bordant le trou traversant 12.

Avantageusement, le bord périphérique extérieur 28 de la première feuille et le bord périphérique extérieur 30 de la deuxième feuille sont fixés à la couche isolante externe supérieure 6 et respectivement à la couche isolante externe inférieure 8 sur une distance radiale R supérieure ou égale à 10 millimètres, à l'aide d'un adhésif de type 3M Y966 ou Y9460 (marque déposée)

Le bord périphérique intérieur 32 de la première feuille est fixé directement et de façon étanche au bord périphérique intérieur 34 de la deuxième feuille par collage de sorte qu'une partie de la première feuille 22 et une partie de la deuxième feuille 24 enceignent la tranche 35 des couches isolantes 4, 6, 8 de manière à empêcher des fibres en matière plastique, et en particulier de Dacron, de s'échapper des couches isolantes internes 4 du matelas.

La première feuille 22 et la deuxième feuille 24 dans une matière souple collante sont réalisées, par exemple, en matière plastique et, de préférence, en Kapton. Avantageusement, la première feuille 22 et la deuxième feuille 24 sont réalisées en Kapton de type Hn.

En variante, la première feuille 22 et la deuxième feuille 24 sont réalisées en Kapton de type 150 FWR019 ou en Kapton de type 150 FWN019. Dans ce cas, la première feuille 22 et la deuxième feuille 24 peuvent être fixées entre elles et aux couches isolantes externes 6, 8 par thermo-soudage.

Le Kapton 150 FWR019 ainsi que le Kapton 150 FWN019 sont des feuilles comprenant une couche de 1 millième de pouce (=25.4 microns) de Kapton polyimide superposée à une couche de 0,5 millième de pouce(=12.7 microns) de FEP fluoropolymère.

Selon ce premier mode de réalisation de l'invention, l'entretoise 16 est souple.

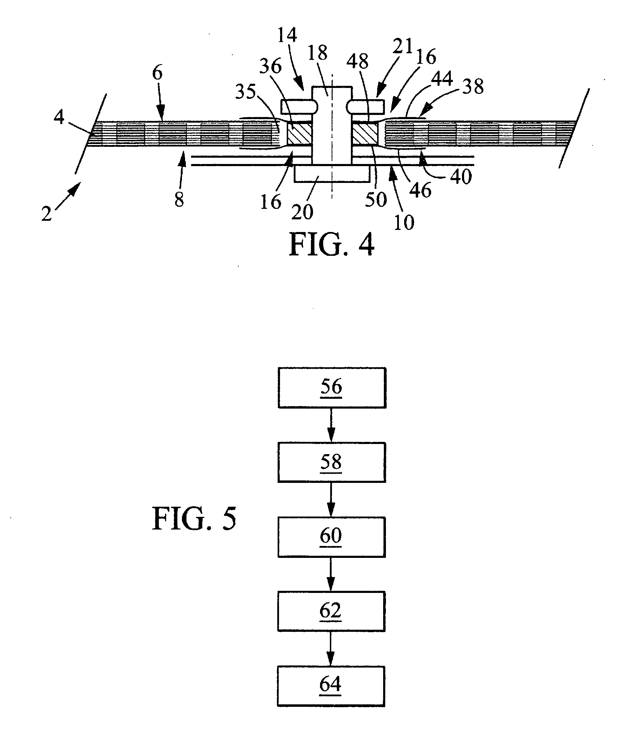

En référence aux figures 3 et 4, le matelas isolant 2 selon le second mode de réalisation comprend une entretoise 16 constituée par une première feuille 38, une deuxième feuille 40 et une rondelle isolante 36 intercalée entre la tranche 35 des couches isolantes 6, 4, 8 bordant le trou traversant 12 et l'élément de fixation 14. Selon ce mode de réalisation, le bord périphérique intérieur de la première feuille est solidarisé indirectement au bord périphérique intérieur de la deuxième feuille.

La rondelle isolante 36 présente un diamètre intérieur sensiblement supérieur au diamètre de la tige 18 et un diamètre extérieur sensiblement inférieur au diamètre D du trou traversant 12. La rondelle isolante 36 est fixée à la couche isolante externe supérieure 6 à l'aide de la première feuille 38 et à la couche isolante externe inférieure 8 à l'aide de la deuxième feuille 40.

Le bord périphérique extérieur 44 de la première feuille est fixé de façon étanche par collage ou thermo-soudure à la couche isolante supérieure externe 6 et le bord périphérique intérieur 48 de la première feuille est fixé de façon étanche par collage à la face annulaire supérieure 52 de la rondelle isolante.

De la même façon, le bord périphérique extérieur 46 de la deuxième feuille est fixé de façon étanche par collage ou thermo soudure à la couche isolante externe inférieure 8 et le bord périphérique intérieur 50 de la deuxième feuille est fixé de façon étanche par collage à la face annulaire inférieure 54 de la rondelle isolante.

La première feuille 38 et la deuxième feuille 40 sont identiques ou similaires aux première feuilles 22 et deuxième feuilles 24 décrites pour le premier mode de réalisation du matelas 2.

La première feuille 38 et la deuxième feuille 40 sont pourvues d'un orifice traversant 42 de diamètre légèrement supérieur ou égal au diamètre intérieur de la rondelle isolante 36.

La rondelle isolante 36 est, par exemple, réalisée dans un matériau tel que de la résine époxy, du plastique à renfort graphite ou du verre.

Ce dernier mode de réalisation est plutôt utilisé avec un système de fixation par vissage.

En variante, la rondelle isolante 36 est munie à son extrémité inférieure d'une collerette fixée, par exemple, par collage adhésif à la couche isolante externe inférieure 8. Dans ce cas, l'entretoise 16 est formée par une rondelle isolante et une unique feuille dont le bord périphérique extérieur est fixé à la couche isolante externe supérieure 6 et dont le bord périphérique intérieur est fixé à la rondelle isolante 36.

En variante, l'entretoise 16 est réalisée à partir d'une unique feuille fixée à une couche isolante externe et pourvue d'un orifice muni d'échancrure radiale. Les bords intérieurs de cette feuille bordant l'orifice sont rabattus et fixés à l'autre couche isolante externe et en particulier au bord du trou traversant de l'autre couche isolante externe.

En référence aux figures 1, 2 et 5, le procédé de fixation d'un matelas isolant thermiquement 2 à un support 10 à l'aide d'un élément de fixation 14 débute par une étape 56 de perforation des couches isolantes 4, 6 et 8 pour réaliser le trou traversant 12 de diamètre D. Cette étape est généralement réalisée par emboutissage du matelas 2 à l'aide d'un emporte-pièce.

Puis, au cours d'une étape 58, le bord périphérique extérieur 28 de la première feuille 22 est fixé de façon étanche à la couche isolante externe supérieure 6 et le bord périphérique extérieur 30 de la deuxième feuille 24 est fixé de façon étanche à la couche isolante externe inférieure 8.

Au cours d'une étape 60, la partie centrale de la première feuille 22 est fixée directement et de façon étanche par exemple, par collage, thermo collage ou thermo-fusion, à la partie centrale de la deuxième feuille 24.

Au cours d'une étape 62, la première feuille 22 et la deuxième feuille 24 sont perforées, par exemple par emboutissage à l'aide d'un emporte-pièce, pour réaliser un orifice traversant 26 de diamètre d sensiblement supérieur au diamètre de la tige 18 de l'élément de fixation.

Au cours d'une étape 64, la tige 18 de l'élément de fixation 14 est agencée dans ledit trou traversant 12, et en particulier dans l'orifice 26, et dans un orifice du support 10 pour fixer le matelas au support 10.

En variante, en référence aux figures 3, 4 et 5, l'étape 60 est remplacée par une étape d'agencement de la rondelle isolante 36 dans le trou traversant 12. Dans ce cas, l'étape 62 est remplacée par une étape de fixation étanche de la première feuille 38 et de la deuxième feuille 40, chacune à une couche isolante externe 6, 8 et à une face annulaire 52, 54 de la rondelle isolante 36.

Avantageusement, un tel matelas permet de supprimer la pollution particulaire.

Avantageusement, un matelas 2 comprenant ce système de fixation permet d'assurer une étanchéité entre le matelas 2 et le support 10 au niveau de la fixation par rapport à l'air et en particulier par rapport à la lumière.

En référence aux figures 1 et 2. avantageusement, la première feuille 22 de l'entretoise 16 est fabriquée dans un matériau identique au matériau de la feuille externe supérieure 6 du matelas isolant sur laquelle elle est collée. Ce matériau comprend, par exemple, du Kapton noir, aluminisé à l'extérieur ou a l'intérieur ou sur les deux faces. En variante, ce matériau comprend du Teflon. De la même manière, la deuxième feuille 24 de l'entretoise 16 est fabriquée dans un matériau identique à celui de la feuille externe inférieure 8 du matelas isolant. Ainsi, les fonctions thermique et optique du matelas thermiquement isolé ne sont pas altérées même localement au niveau des fixations du matelas.

## Revendications

1. Matelas isolant thermiquement (2) pour engin spatial comprenant :
- plusieurs couches isolantes (4, 6, 8) superposées les unes aux autres, lesdites couches isolantes (4, 6, 8) étant pourvues d'un trou traversant (12) ;
- un élément de fixation (14) propre à fixer le matelas isolant (2) à un support (10), ledit élément de fixation (14) comportant au moins une partie (18) agencée dans ledit trou traversant (12) ;
- une entretoise (16) propre à enceindre la tranche (35) des couches isolantes (4, 6, 8) bordant le trou traversant (12); ladite entretoise (16) étant intercalée entre ladite tranche (35) des couches isolantes (4, 6, 8) et ladite partie (18) de l'élément de fixation (14),
caractérisé en ce ladite entretoise (16) comprend une première feuille (22 ; 38) et une deuxième feuille (24 ; 40) pourvues chacune d'un orifice traversant (26 ; 42) propre à recevoir ladite partie (18) de l'élément de fixation (14); le diamètre (d) de l'orifice traversant (26 ; 42) de la première feuille (22 ; 38) étant inférieur au diamètre (D) du trou traversant (12) ; le diamètre (d) de l'orifice traversant (26 ; 42) de la deuxième feuille (24 ; 40) étant inférieur au diamètre (D) du trou traversant (12) ;
et en ce que l'ensemble du bord périphérique extérieur (28 ; 44) de la première feuille (22 ; 38) est fixé de façon étanche à une couche isolante externe (6) et l'ensemble du bord périphérique extérieur (30 ; 46) de la deuxième feuille (24 ; 40) est fixé de façon étanche à l'autre couche isolante externe (8).

2. Matelas isolant thermiquement (2) selon la revendication 1, **caractérisé en ce que** la fixation étanche entre le bord périphérique extérieur (28 ; 44) de la première feuille (22 ; 38) et la couche isolante externe (6, 8) est réalisée par collage ou thermo-soudure et **en ce que** la fixation étanche entre le bord périphérique extérieur (30 ; 46) de la deuxième feuille (24 ; 40) et l'autre couche isolante externe (6, 8) est réalisée par collage ou thermo-soudure.

3. Matelas isolant thermiquement (2) selon l'une quelconque des revendications 1 et 2. **caractérisé en ce que** un bord périphérique intérieur (32 ; 48) de la première feuille (22 ; 38) est solidarisé de façon étanche directement à un bord périphérique intérieur (34 ; 50) de la deuxième feuille (24 ; 40).

4. Matelas isolant thermiquement (2) selon l'une quelconque des revendications 1 à 3, **caractérisé en ce que** ladite entretoise (16) est réalisée en plastique.

5. Matelas isolant thermiquement (2) selon l'une quelconque des revendications 1 à 4, **caractérisé en ce que** ladite entretoise (16) est réalisée en matériau connu sous le nom de « Kapton », et de préférence en matériau connu sous le nom de « Kapton 150 » FWN019 ou « Kapton 150 FWR019 ».

6. Matelas isolant thermiquement (2) selon l'une quelconque des revendications 1 à 5, **caractérisé en ce que** ladite entretoise comprend une rondelle isolante (36) propre à recevoir ladite partie (18) de l'élément de fixation (14).

7. Matelas isolant thermiquement (2) selon la revendication 6, **caractérisé en ce que** le bord périphérique intérieur (48, 50) d'au moins une feuille (38, 40), parmi la première feuille (38) et la deuxième feuille (40), est fixé à une face annulaire (52, 54) de ladite rondelle isolante (36).

8. Matelas isolant selon la revendication 7, **caractérisé en ce que** le bord périphérique intérieur (48) de la première feuille (38) et le bord périphérique intérieur (50) de la deuxième feuille (40) sont fixés chacun à une face annulaire (52, 54) de ladite rondelle isolante (36).

9. Matelas isolant thermiquement (2) selon l'une quelconque des revendications 6 à 8, **caractérisé en ce que** ladite rondelle isolante (36) est réalisé dans un matériau parmi de la résine époxy, du plastique à renfort graphite et du verre.

10. Matelas isolant thermiquement (2) selon l'une quelconque des revendications 1 à 9, **caractérisé en ce que** ledit trou traversant (12) présente un diamètre (D) sensiblement compris entre 6 et 12 millimètres, et de préférence compris entre 8 et 10 millimètres.

11. Matelas isolant thermiquement (2) selon l'une quelconque des revendications 1 à 10, **caractérisé en ce que** ledit orifice traversant (26) présente un diamètre (d) sensiblement compris entre 2 et 8 millimètres, et de préférence compris entre 3 et 6 millimètres.

12. Matelas isolant thermiquement (2) selon l'une quelconque des revendications 1 à 11, **caractérisé en ce que** la différence entre le diamètre (D) du trou traversant (12) et le diamètre (d) de l'orifice traversant (26), est supérieure à 3 millimètres.

13. Matelas isolant thermiquement (2) selon l'une quelconque des revendications 4 à 12, **caractérisé en ce que** le bord périphérique extérieur (28 ; 44) de la première feuille (22 ; 38) et le bord périphérique extérieur (30 ; 46) de la deuxième feuille (24 ; 40) sont fixés aux couches isolantes externes (6, 8) sur une distance radiale (R) supérieure ou égale à 10 millimètres.

14. Procédé de fixation d'un matelas isolant thermiquement (2) pour engin spatial à un support (10) à l'aide d'un élément de fixation (14), ledit matelas isolant thermiquement (2) comprenant plusieurs couches isolantes (4, 6, 8) superposées les unes aux autres, le procédé comportant les étapes suivantes :
- perforation (56) des couches isolantes (4, 6, 8) pour réaliser un trou traversant (12) ;
- fixation (58, 60, 62) d'une entretoise (16) aux couches isolantes (4, 6, 8) pour enceindre la tranche (35) des couches isolantes (4, 6, 8) bordant le trou traversant (12) ; ladite étape de fixation (58,60,62) comprenant les étapes suivantes :
- fixation étanche (58) d'au moins un bord périphérique extérieur (28 ; 44) de la première feuille (22 ; 38) à une couche isolante externe (6) ;
- fixation étanche (58) d'au moins un bord périphérique extérieur (30 ; 46) de la deuxième feuille (24 ; 40) à l'autre couche isolante externe (8) ;
- perforation (62) de la première feuille (22 ; 38) pour réaliser un orifice traversant (26) ayant un diamètre (d) inférieure au diamètre (D) du trou traversant ;
- perforation (62) de la deuxième feuille (24 ; 40) pour réaliser un orifice traversant (26) ayant un diamètre (d) inférieure au diamètre (D) du trou traversant ; une partie de la première feuille (22 ; 38) et une partie de la deuxième feuille (24 ; 40) formant l'entretoise (16) ; - agencement (64) d'au moins une partie (18) de l'élément de fixation (14) dans ledit trou traversant (12) et dans un orifice du support (10) ; ladite entretoise (16) étant intercalée entre la tranche (35) des couches isolantes (4, 6, 8) et ladite partie de l'élément de fixation (14).

15. Procédé de fixation selon la revendication 14, **caractérisé en ce que** l'étape de fixation (58, 60, 62) comporte en outre une étape de fixation (60) étanche de la partie centrale de la première feuille (22 ; 38) directement sur la partie centrale de la deuxième feuille (24 ; 40).

16. Procédé de fixation selon la revendication 15, **caractérisé en ce que** l'étape de fixation étanche de la première feuille (22 ; 38) et de la deuxième feuille (24 ; 40) aux couches isolantes externes (6, 8) et l'étape de fixation de la partie centrale de la première feuille (22 ; 38) à la partie centrale de la deuxième feuille (24 ; 40) sont réalisées par thermo-soudage ou thermo collage.

17. Procédé de fixation selon la revendication 14, **caractérisé en ce que** l'étape de fixation (58, 60, 62) comporte les étapes suivantes :
- agencement (58) d'une rondelle isolante (36) dans le trou traversant (12) ; et
- fixation (60) de la première feuille (22 ; 38) et de la deuxième feuille (24 ; 40) chacune à une face annulaire (52, 54) de la rondelle isolante (36).

## Patentansprüche

1. Wärmeisolierende Matte (2) für ein Raumfahrzeug, umfassend:
- mehrere Isolierschichten (4, 6, 8), die übereinander gelagert sind, wobei die Isolierschichten (4, 6, 8) mit einem durchgehenden Loch (12) versehen sind;
- ein Befestigungselement (14), das geeignet ist, die Isoliermatte (2) an einem Träger (10) zu befestigen, wobei das Befestigungselement (14) mindestens einen Teil (18) umfasst, der in dem durchgehenden Loch (12) angeordnet ist;
- einen Verbinder (16), der geeignet ist, den Abschnitt (35), der Isolierschichten (4, 6, 8), der an das durchgehende Loch (12) angrenzt, einzufassen; wobei der Verbinder (16) zwischen dem Abschnitt (35) der Isolierschichten (4, 6, 8) und dem Teil (18) des Befestigungselements (14) angeordnet ist,
**dadurch gekennzeichnet, dass** der Verbinder (16) eine erste Folie (22, 38) und eine zweite Folie (24; 40) umfasst, die jeweils mit einer durchgehenden Öffnung (26; 42) versehen sind, die geeignet ist, den Teil (18) des Befestigungselements (14) aufzunehmen; wobei der Durchmesser (d) der durchgehenden Öffnung (26; 42) der ersten Folie (22; 38) kleiner als der Durchmesser (D) des durchgehenden Lochs (12) ist; wobei der Durchmesser (d) der durchgehenden Öffnung (26; 42) der zweiten Folie (24; 40) kleiner als der Durchmesser (D) des durchgehenden Lochs (12) ist;
und dass die Gesamtheit des äußeren Umfangsrandes (28; 44) der ersten Folie (22; 38) in dichter Weise an einer äußeren Isolierschicht (6) befestigt ist und die Gesamtheit des äußeren Umfangsrandes (30; 46) der zweiten Folie (24; 40) in dichter Weise an der anderen äußeren Isolierschicht (8) befestigt ist.

2. Wärmeisolierende Matte (2) nach Anspruch 1, **dadurch gekennzeichnet, dass** die dichte Befestigung zwischen dem äußeren Umfangsrand (28; 44) der ersten Folie (22; 38) und der äußeren Isolierschicht (6, 8) durch Kleben oder Heißsiegeln realisiert ist, und dass die dichte Befestigung zwischen dem äußeren Umfangsrand (30; 46) der zweiten Folie (24; 40) und der anderen äußeren Isolierschicht (6, 8) durch Kleben oder Heißsiegeln realisiert ist.

3. Wärmeisolierende Matte (2) nach einem der Ansprüche 1 und 2, **dadurch gekennzeichnet, dass** ein innerer Umfangsrand (32; 48) der ersten Folie (22; 38) in dichter Weise direkt mit einem inneren Umfangsrand (34; 50) der zweiten Folie (24; 40) verbunden ist.

4. Wärmeisolierende Matte (2) nach einem der Ansprüche 1 bis 3, **dadurch gekennzeichnet, dass** der Verbinder (16) aus Kunststoff ist.

5. Wärmeisolierende Matte (2) nach einem der Ansprüche 1 bis 4, **dadurch gekennzeichnet, dass** der Verbinder (16) aus einem unter dem Namen "Kapton" und vorzugsweise aus einem unter dem Namen "Kapton 150" FWN019 oder "Kapton 150 FWR019" bekannten Material ist.

6. Wärmeisolierende Matte (2) nach einem der Ansprüche 1 bis 5, **dadurch gekennzeichnet, dass** der Verbinder eine Isolierscheibe (36) umfasst, die geeignet ist, den Teil (18) des Befestigungselements (14) aufzunehmen.

7. Wärmeisolierende Matte (2) nach Anspruch 6, **dadurch gekennzeichnet, dass** der innere Umfangsrand (48, 50) mindestens einer Folie (38, 40) unter der ersten Folie (38) und der zweiten Folie (40) an einer ringförmigen Fläche (52, 54) der Isolierscheibe (36) befestigt ist.

8. Isoliermatte nach Anspruch 7, **dadurch gekennzeichnet, dass** der innere Umfangsrand (48) der ersten Folie (38) und der innere Umfangsrand (50) der zweiten Folie (40) jeweils an einer ringförmigen Fläche (52, 54) der Isolierscheibe (36) befestigt sind.

9. Wärmeisolierende Matte (2) nach einem der Ansprüche 6 bis 8, **dadurch gekennzeichnet, dass** die Isolierscheibe (36) aus einem der Materialien Epoxidharz, Kunststoff mit Graphitverstärkung und Glas hergestellt ist.

10. Wärmeisolierende Matte (2) nach einem der Ansprüche 1 bis 9, **dadurch gekennzeichnet, dass** das durchgehende Loch (12) einen Durchmesser (D) etwa zwischen 6 und 12 Millimeter, vorzugsweise zwischen 8 und 10 Millimeter, aufweist.

11. Wärmeisolierende Matte (2) nach einem der Ansprüche 1 bis 10, **dadurch gekennzeichnet, dass** die durchgehende Öffnung (26) einen Durchmesser (d) etwa zwischen 2 und 8 Millimeter und vorzugsweise zwischen 3 und 6 Millimeter aufweist.

12. Wärmeisolierende Matte (2) nach einem der Ansprüche 1 bis 11, **dadurch gekennzeichnet, dass** die Differenz zwischen dem Durchmesser (D) des durchgehenden Lochs (12) und dem Durchmesser (d) der durchgehenden Öffnung (26) größer als 3 Millimeter ist.

13. Wärmeisolierende Matte (2) nach einem der Ansprüche 4 bis 12, **dadurch gekennzeichnet, dass** der äußere Umfangsrand (28; 44) der ersten Folie (22; 38) und der äußere Umfangsrand (30; 46) der zweiten Folie (24; 40) an den äußeren Isolierschichten (6, 8) auf einem Radialabstand (R) größer oder gleich 10 Millimeter befestigt sind.

14. Verfahren zur Befestigung einer wärmeisolierenden Matte (2) für ein Raumfahrzeug an einem Träger (10) mit Hilfe eines Befestigungselements (14), wobei die wärmeisolierende Matte (2) mehrere Isolierschichten (4, 6, 8), die übereinander angeordnet sind, umfasst, wobei das Verfahren die folgenden Schritte umfasst:
- Perforation (56) der Isolierschichten (4, 6, 8), um ein durchgehendes Loch (12) herzustellen;
- Befestigung (58, 60, 62) eines Verbinders (16) an den Isolierschichten (4, 6, 8), um den Abschnitt (35) der Isolierschichten (4, 6, 8), der an das durchgehende Loch (12) angrenzt, einzufassen; wobei der Schritt der Befestigung (58, 60, 62) die folgenden Schritte umfasst:
- dichtende Befestigung (58) mindestens eines äußeren Umfangsrandes (28; 44) der ersten Folie (22; 38) an einer äußeren Isolierschicht (6);
- dichtende Befestigung (58) mindestens eines äußeren Umfangsrandes (30; 46) der zweiten Folie (24; 40) an der anderen äußeren Isolierschicht (8);
- Perforation (62) der ersten Folie (22; 38), um eine durchgehende Öffnung (26), die einen kleineren Durchmesser (d) als der Durchmesser (D) des durchgehenden Lochs aufweist, herzustellen;
- Perforation (62) der zweiten Folie (24; 40), um eine durchgehende Öffnung (26), die einen kleineren Durchmesser (d) als der Durchmesser (D) des durchgehenden Lochs aufweist, herzustellen; wobei ein Teil der ersten Folie (22; 38) und ein Teil der zweiten Folie (24; 40) den Verbinder (16) bilden;
- Anordnung (64) mindestens eines Teils (18) des Befestigungselements (14) in dem durchgehenden Loch (12) und in einer Öffnung eines Trägers (10); wobei der Verbinder (16) zwischen dem Abschnitt (35) der Isolierschichten (4, 6, 8) und dem Teil des Befestigungselements (14) angeordnet ist.

15. Befestigungsverfahren nach Anspruch 14, **dadurch gekennzeichnet, dass** der Befestigungsschritt (58, 60, 62) ferner einen Schritt der dichtenden Befestigung (60) des zentralen Teils der ersten Folie (22; 38) direkt auf dem zentralen Teil der zweiten Folie (24; 40) umfasst.

16. Befestigungsverfahren nach Anspruch 15, **dadurch gekennzeichnet, dass** der Schritt der dichtenden Befestigung der ersten Folie (22; 38) und der zweiten Folie (24; 40) an den äußeren Isolierschichten (6, 8) und der Schritt der Befestigung des zentralen Teils der ersten Folie (22; 38) an dem zentralen Teil der zweiten Folie (24; 40) durch Heißsiegeln oder Heißkleben erfolgen.

17. Befestigungsverfahren nach Anspruch 14, **dadurch gekennzeichnet, dass** der Befestigungsschritt (58, 60, 62) die folgenden Schritte umfasst:
- Anordnung (58) einer Isolierscheibe (36) in dem durchgehenden Loch (12); und
- Befestigung (60) der ersten Folie (22; 38) und der zweiten Folie (24; 40) jeweils an einer ringförmigen Fläche (52, 54) der Isolierscheibe (36).

## Claims

1. Thermal insulation blanket (2) for spacecraft, comprising:
- multiple insulating layers (4, 6, 8) superimposed atop one another, said insulating layers (4, 6, 8) being equipped with a through-hole (12);
- an attaching element (14) for attaching the insulation blanket (2) to a support (10), said attaching element (14) having at least a part (18) arranged in said through-hole (12);
- a spacer (16) for enclosing the section (35) of insulating layers (4, 6, 8) bordering the through-hole (12); said spacer (16) being inserted between said section (35) of insulating layers (4, 6, 8) and said part (18) of the attaching element (14),
wherein said spacer (16) comprises a first sheet (22; 38) and a second sheet (24; 40), each equipped with a through-opening (26; 42) suitable for receiving said part (18) of the attaching element (14); the diameter (d) of the through-opening (26; 42) of the first sheet (22; 38) being less than the diameter (D) of the through-hole (12), and the diameter (d) of the through-opening (26; 42) of the second sheet (24; 40) being less than the diameter (D) of the through-hole (12);
and wherein the entirety of the outer peripheral edge (28; 44) of the first sheet (22; 38) is attached in a fluid-tight manner to one external insulating layer (6) and the entirety of the outer peripheral edge (30; 46) of the second sheet (24; 40) is attached in a fluid-tight manner to the other external insulating layer (8).

2. Thermal insulation blanket (2) according to claim 1, wherein the fluid-tight attachment between the outer peripheral edge (28; 44) of the first sheet (22; 38) and the external insulating layer (6, 8) is established by gluing or heat welding and wherein the fluid-tight attachment between the outer peripheral edge (30; 46) of the second sheet (24; 40) and the other external insulating layer (6, 8) is established by gluing or heat welding.

3. Thermal insulation blanket (2) according to either of claims 1 or 2, wherein an inner peripheral edge (32; 48) of the first sheet (22; 38) is attached directly and in a fluid-tight manner to an inner peripheral edge (34; 50) of the second sheet (24; 40).

4. Thermal insulation blanket (2) according to any one of claims 1 to 3, wherein said spacer (16) is made of plastic.

5. Thermal insulation blanket (2) according to any one of claims 1 to 4, wherein said spacer (16) is made of a material known as "Kapton", and preferably of material known as "Kapton 150 FWN019" or "Kapton 150 FWR019".

6. Thermal insulation blanket (2) according to any one of claims 1 to 5, wherein said spacer comprises a grommet (36) capable of receiving said part (18) of the attaching element (14).

7. Thermal insulation blanket (2) according to claim 6, wherein the inner peripheral edge (48, 50) of at least one sheet (38, 40) from among the first sheet (38) and the second sheet (40) is attached to an annular face (52, 54) of said grommet (36).

8. Insulation blanket according to claim 7, wherein the inner peripheral edge (48) of the first sheet (38) and the inner peripheral edge (50) of the second sheet (40) are each attached to an annular face (52, 54) of said grommet (36).

9. Thermal insulation blanket (2) according to any one of claims 6 to 8, wherein said grommet (36) is made of a material from among: epoxy resin, graphite-reinforced plastic, and glass.

10. Thermal insulation blanket (2) according to any one of claims 1 to 9, wherein said through-hole (12) has a diameter (D) substantially between 6 and 12 millimeters, and preferably between 8 and 10 millimeters.

11. Thermal insulation blanket (2) according to any one of claims 1 to 10, wherein said through-opening (26) has a diameter (d) substantially between 2 and 8 millimeters, and preferably between 3 and 6 millimeters.

12. Thermal insulation blanket (2) according to any one of claims 1 to 11, wherein the difference between the diameter (D) of the through-hole (12) and the diameter (d) of the through-opening (26) is greater than 3 millimeters.

13. Thermal insulation blanket (2) according to any one of claims 4 to 12, wherein the outer peripheral edge (28; 44) of the first sheet (22; 38) and the outer peripheral edge (30; 46) of the second sheet (24; 40) are attached to the external insulating layers (6, 8) for a radial distance (R) greater than or equal to 10 millimeters.

14. Method for attachment of a thermal insulation blanket (2) for spacecraft to a support (10) using an attaching element (14), said thermal insulation blanket (2) comprising multiple insulating layers (4, 6, 8) superimposed atop one another, said method comprising the following steps:
- perforating (56) the insulating layers (4, 6, 8) in order to create a through-hole (12);
- attaching (58, 60, 62) a spacer (16) to the insulating layers (4, 6, 8) in order to enclose the section (35) of insulating layers (4, 6, 8) bordering the through-hole (12), said attachment step (58,60,62) comprising the following steps:
- fluid-tight attachment (58) of at least one outer peripheral edge (28; 44) of the first sheet (22; 38) to an external insulating layer (6);
- fluid-tight attachment (58) of at least one outer peripheral edge (30; 46) of the second sheet (24; 40) to the other external insulating layer (8);
- perforation (62) of the first sheet (22; 38) in order to create a through-opening (26) having a diameter (d) less than the diameter (D) of the through-hole;
- perforation (62) of the second sheet (24; 40) in order to create a through-opening (26) having a diameter (d) less than the diameter (D) of the through-hole; a part of the first sheet (22; 38) and a part of the second sheet (24; 40) forming the spacer (16);
- arrangement (64) of at least a part (18) of the attaching element (14) in said through-hole (12) and in an opening in the support (10), said spacer (16) being inserted between the section (35) of insulating layers (4, 6, 8) and said part of the attaching element (14).

15. Method for attachment according to claim 14, wherein the attachment step (58, 60, 62) additionally comprises a step (60) of fluid-tight attachment of the central part of the first sheet (22; 38) directly to the central part of the second sheet (24; 40).

16. Method for attachment according to claim 15, wherein the step of fluid-tight attachment of the first sheet (22; 38) and the second sheet (24; 40) to the external insulating layers (6, 8) and the step of attaching the central part of the first sheet (22; 38) to the central part of the second sheet (24; 40) are performed by heat welding or heat bonding.

17. Method for attachment according to claim 14, wherein the attachment step (58, 60, 62) comprises the following steps:
- arranging (58) a grommet (36) in the through-hole (12); and
- attaching (60) the first sheet (22; 38) and the second sheet (24; 40), each one to an annular face (52, 54) of the grommet (36).
